Europäisches Patentamt

European Patent Office

Office européen des brevets

(11) Veröffentlichungsnummer: **0 392 331**
**A1**

(12) EUROPÄISCHE PATENTANMELDUNG

(21) Anmeldenummer: 90106424.6

(22) Anmeldetag: 04.04.90

(51) Int. Cl.⁵: **B65D 73/02, B65G 47/26,**
**B65B 69/00**

(30) Priorität: 14.04.89 DE 3912336

(43) Veröffentlichungstag der Anmeldung:
**17.10.90 Patentblatt 90/42**

(84) Benannte Vertragsstaaten:
**AT BE CH DE DK ES FR GB GR IT LI LU NL SE**

(71) Anmelder: **D. Swarovski & Co.**
**Postfach 15**
**A-6112 Wattens(AT)**

(72) Erfinder: **Pöll, Martin**
**Hubertusweg 5A**
**A-6122 Fritzens(AT)**

(74) Vertreter: **Kador & Partner**
**Corneliusstrasse 15**
**D-8000 München 5(DE)**

(54) **Magazinstreifen für Schmucksteine oder andere Kleinteile.**

(57) Magazinstreifen (1) für Schmucksteine und andere Kleinteile umfassend eine Kunststoffolie, welche Vertiefungen (10) zur Aufnahme der Schmucksteine aufweist, wobei die Vertiefungen (10) zumindest einem Teilprofil der darin zu positionierenden Schmucksteine angepaßt sind, die Vertiefungen reihenförmig angeordnet sind und angrenzend an die Vertiefungen (10) elastisch verformbare Haltelippen (11, 12) vorgesehen sind. Die Entnahme der Schmucksteine oder anderer Kleinteile kann in einfacher Weise und automatengerecht nach Spreizung der Haltelippen (11, 12) erfolgen.

# FIG. 3

Die Erfindung bezieht sich auf Magazinstreifen für Schmucksteine oder andere Kleinteile sowie auf Verfahren zum Entnehmen der Schmucksteine oder der anderen KLeinteile aus solchen Magazinstreifen.

Der Erfindung liegt die Aufgabe zugrunde, einen Magazinstreifen zu schaffen, welcher eine sichere Positionierung der Schmucksteine oder anderer Kleinteile gewährleistet und gleichzeitig eine einfache, insbesondere automatengerechte Entnahme gestattet.

Der Erfindung liegt die Erkenntnis zugrunde, daß diese Aufgabe durch einen Magazinstreifen mit Vertiefungen gelöst werden kann, wobei die Schmucksteine oder andere Kleinteile mittels Haltelippen in den Vertiefungen positioniert gehalten werden.

Gegenstand der Erfindung ist ein Magazinstreifen für Schmucksteine oder anderer Kleinteile umfassend eine Kunststoffolie, welche Vertiefungen zur Aufnahme der Schmucksteine aufweist, die Vertiefungen zumindest einem Teilprofil der darin zu positionierenden Schmucksteine angepaßt sind, die Vertiefungen reihenförmig angeordnet sind und angrenzend an die Vertiefungen Haltelippen vorgesehen sind, wobei die Haltelippen im geschlossenen Zustand über die positionierten Schmucksteine greifen und sie dadurch in ihrer Lage fixieren und die Haltelippen durch elastische Verformung außer Eingriff mit den Schmucksteinen bringbar sind, der dadurch gekennnzeichnet ist, daß die Haltelippen in Längs- oder Querrichtung des Magazinstreifens durchgehend sind und ein durchgehend nach unten offenes Profil aufweisen, so daß die Haltelippen durch Dehnen des Magazinstreifens quer zur Anordnungsrichtung der Haltelippen außer Eingriff mit den Schmucksteinen bringbar sind.

Vorzugsweise weist der Magazinstreifen mehrere parallele Reihen von Vertiefungen auf. Auch wird es bevorzugt, daß die Haltelippen in Längsrichtung des Magazinstreifens angeordnet sind.

Gegenstand der Erfindung sind ferner Verfahren zum Entnehmen von Schmucksteinen aus einem Magazinstreifen.

Bei einem Magazinstreifen mit einer einzigen Längsreihe von Vertiefungen erfolgt dies dadurch, daß die Seitenschenkel einer Führungsschiene in die beiden äußeren Haltelippen des gefüllten Magazinstreifens eingeführt werden, daß der Magazinstreifen längs der Führungsschiene von einem Einlaufabschnitt mit konvergierenden Seitenschenkeln zu einem Entnahmeabschnitt mit divergierenden Seitenschenkeln bewegt wird, so daß die äußeren Haltelippen beim Durchlaufen des Entnahmeabschnitts der Führungsschiene gegen ihre Federvorspannung in Folienquerrichtung gespreizt werden und daß die Schmucksteine in der gespreizten Stellung der äußeren Haltelippen mittels Tupfer oder Vakuumsauger aus den Vertiefungen entnommen werden.

Bei einem Magazinstreifen, mit mehreren parallelen Reihen von Vertiefungen erfolgt die Entnahme derart, dar die Seitenschenkel einer etwa U-förmigen Führungsschiene in die beiden äußeren Haltelippen des gefüllten Magazinstreifens eingeführt werden, daß der Magazinstreifen längs der Führungsschiene von einem Einlaufabschnitt mit geringerem Schenkelabstand zu einem Entnahmeabschnitt mit größerem Schenkelabstand bewegt wird, so daß die zwischen den beiden äußeren Haltelippen liegenden inneren Haltelippen beim Durchlaufen des Abnahmeabschnitts der Führungsschiene gegen ihre Federvorspannung in Magazinstreifenquerrichtung gespreizt werden, wobei gleichzeitig zur Öffnung der beiden äußeren Schließlippen die Seitenschenkel einer Führungsschiene in die beiden äußeren Haltelippen des gefüllten Magazinstreifens eingeführt werden, der Magazinstriefen längs der Führungsschiene von einem Einlaufabschnitt mit konvergierenden Seitenschenkeln zu einem Entnahmeabschnitt mit divergierenden Seitenschenkeln bewegt wird, so daß die äußeren Haltelippen beim Durchlaufen des Entnahmeabschnitts der Führungsschiene gegen ihre Federvorspannung in Magazinstreifenquerrichtung gespreizt werden, und die Schmucksteine in der gespreizten Stellung aller Haltelippen mittels Tupfer oder Vakuumsauger aus den Vertiefungen entnommen werden.

Bei einem Magazinstreifen, dessen Haltelippen in Querrichtung angeordnet sind erfolgt die Entnahme derart, daß der Magazinstreifen in Längsrichtung gedehnt wird, bis die Haltelippen außer Eingriff mit den Schmucksteinen oder den anderen Kleinteilen kommen und diese entnommen werden können.

Die erfindungsgemäße Magazinstreifen eignen sich insbesondere für kleine Schmucksteine, insbesondere solche aus geschliffenem Kristallglas, aber auch jegliche andere Kleinteile, die definierte Abmessungen aufweisen, wie beispielsweise Elektronikkomponenten.

Schmucksteine werden zur Zeit in Briefchen oder Säckchen verpackt auf den Markt gebracht. Die Schmucksteine kommen also lose und ungeordnet in die Hand des Verarbeiters. Für eine automatisierte Verarbeitung bedeutet die Darbietung der Schmucksteine oder anderer Kleinteile in einem Magazin in exakter Lage und definierter Position einen enormen Vorteil. Insbesondere entfällt die Aufbereitungspositionierung der Schmucksteine durch Förderrüttler oder dergleichen. Für die händische Verarbeitung von Schmucksteinen, z.B. beim Einkleben in Schmuckstücke mit Hilfe von Tupfer oder Saugstift sind beachtliche Leistungssteigerungen ebenfalls möglich, da aus dem Magazin eine gleichförmig definierte Entnahme der Schmucksteine möglich ist. Eine Verminderung der üblichen Manipulationsverluste ist ein weiterer Vorteil.

Weitere Vorteile liegen darin, daß die Schmucksteine exakt positioniert sind. Die Qualitätskontrolle wird erleichtert. Mit Tupfer oder Vakuumstift können die Schmucksteine schneller aufgenommen werden. Die Darreichung ist insbesondere automatengerecht, beispielsweise für die Herstellung von Kesselketten. Eine Mengenkontrolle ist leicht möglich. Die Schmucksteine oder andere Kleinteile sind beim Transport optimal geschützt. Es ist eine bessere Produktpräsentation sowie Qualitätspräsentation möglich. Die Abgabe von Teilmengen ist leicht möglich. Durch die Magazinierung ergibt sich außerdem ein guter Schutz gegen Auswechslung der Ware.

Gemäß einer bevorzugten Ausführungsform weisen die Magazinstreifen Abdeckungen, insbesondere in Form einer Kunststoffolie, auf der Oberseite auf. Dies bringt zum einen den Vorteil, daß die Schmucksteine gegen mechanische Beanspruchung geschützt sind und zum anderen den sehr wesentlichen Vorteil, daß die Schmucksteine vor Staub, Feuchtigkeit etc. geschützt sind und somit auch nach längerer Lagerung im "Neuzustand" verarbeitet werden könnnen. Die Abdeckfolie kann mit dem Magazinstreifen verschweißt oder verklebt sein. Vorzugsweise weist sie einen Haftkleber auf, jedoch bevorzugterweise nur in jenen Bereichen, insbesondere den Randbereichen, wo die Folie mit den Steinen nicht in Kontakt kommt, damit beim Abziehen der Folie die Steine nicht an dieser haften bleiben. Ein weiterer Vorteil der Abdeckfolie liegt darin, daß diese gut bedruckt werden kann und damit Produktinformationen, z.B. über die Steingröße, gemacht werden können.

Die Erfindung wird nachstehend anhand der Zeichnung, die beispielhafte Ausführungsformen zeigt, näher erläutert. Es zeigen:

Figur 1 einen Querschnitt durch eine erste Ausführungsform des erfindungsgemäßen Magazinstreifens mit drei Reihen von Vertiefungen zur Aufnahme von Schmucksteinen;

Figur 2 eine Draufsicht auf einen Ausschnitt des Magazinstreifens nach Figur 1;

Figur 2a eine Draufsicht auf einen Ausschnitt eines Magazins mit anders ausgebildeten Haltelippen;

Figur 3 einen Querschnitt durch den Einlaufabschnitt einer Führungsschiene, in welche der Magazinstreifen gemäß Figur 1 zur Entnahme der Schmucksteine eingesetzt ist;

Figur 4 einen Querschnitt durch den Entnahmeabschnitt der Führungsschienen nach Figur 3;

Figur 5 einen Querschnitt durch ein zweites Ausführungsbeispiel des erfindungsgemäßen Magazinstreifens für Schmucksteine, welcher in den Einlaufabschnitt einer Führungsschiene zur Entnahme der Schmucksteine eingeführt ist;

Figur 6 einen Querschnitt durch den Entnahmeabschnitt der Führungsschiene nach Figur 5;

Figur 7 eine Draufsicht auf die Führungsschiene gemäß Figuren 5 und 6;

Figur 8 einen Querschnitt durch eine dritte Ausführungsform des erfindungsgemäßen Magazinstreifens für Schmucksteine; und

Figur 9 einen Querschnitt durch ein viertes Ausführungs beispiel des erfindungsgemäßen Magazinstreifens für quaderförmige Elektronikbausteine.

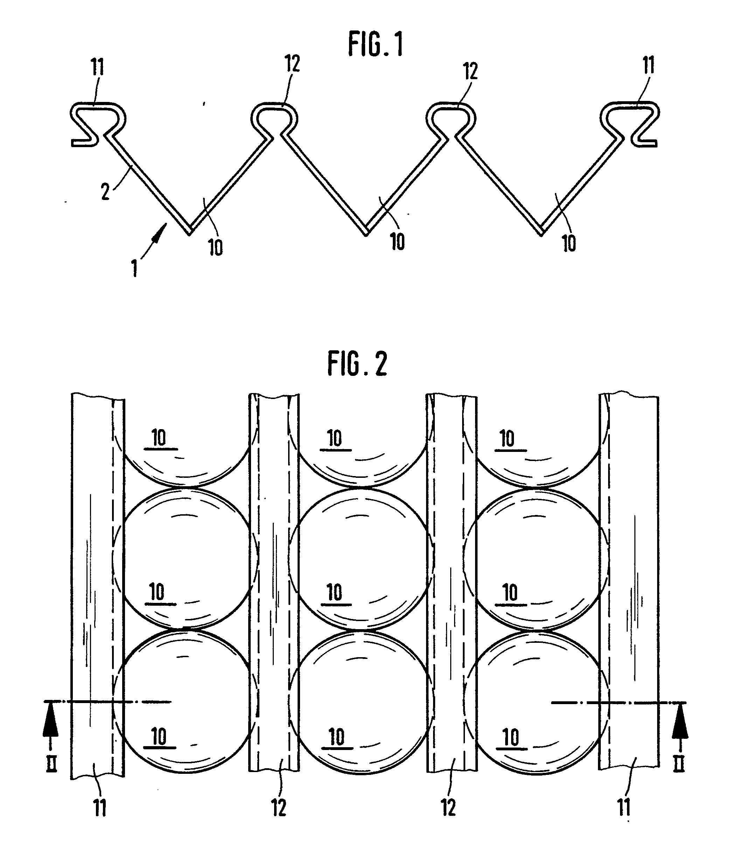

Der in Figur 1 im Querschnitt veranschaulichte Magazinstreifen 1 für Schmuckstreifen des Typs "Chatons" besteht aus einer dünnen Kunststoffolie. Besonders eignen sich Folien aus Polyvinylchlorid, Polyethylen, Polypropylen oder Polystyrol. Die Kunststoffolien weisen üblicherweise eine Stärke von 0,1 bis 2 mm auf. Die Vertiefungen für die Schmucksteine oder andere Kleinteile und die Ausbildung der Haltelippen erfolgt vorzugsweise durch Tiefziehtechnik. Es versteht sich jedoch, daß die erfindungsgemäßen Magazinstreifen aus beliebigen Materialien mittels beliebiger Verfahren hergestellt werden können.

Die erfindungsgemäßen Magazinstreifen werden als "Streifen" bezeichnet, weil in der Regel ihre Länge größer ist, als ihre Breite. Es versteht sich aber, daß unter dem Ausdruck "Magazinstreifen" auch blattförmige Ausführungsformen, deren Länge und Breite etwa gleich sind, subsummiert werden.

Der Magazinstreifen weist zumindest eine Reihe von hintereinander angeordneten Vertiefungen für die Schmucksteine auf. Es können jedoch auch mehrere Reihen von Vertiefungen, nämlich zwei, drei oder bedeutend mehr Reihen parallel angeordnet sein.

Die Abmessungen der Schmucksteine liegen vorzugsweise im Bereich von 1 bis 10 mm Durchmesser. Es versteht sich, daß die Magazinstreifen jedoch für einen weiten Größenbereich von Schmucksteinen oder anderen Kleinteilen zur Magazinierung geeignet sind.

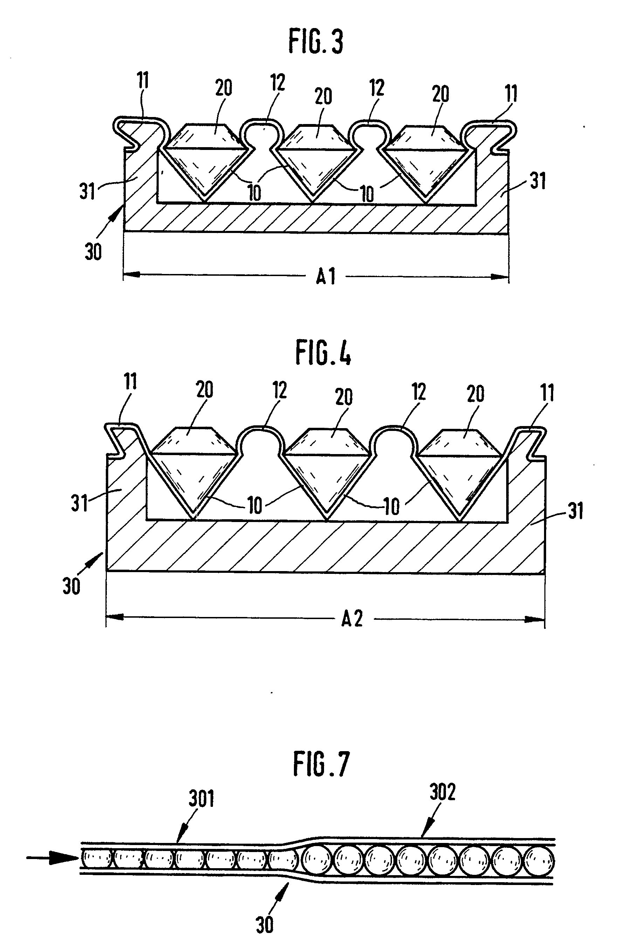

Die in Reihen angeordneten Vertiefungen 10 sind zumindest einem Teilprofil der darin zu positionierenden Schmucksteine 20 angepaßt. Wie Figur 1 in Verbindung mit Figur 3 zu entnehmen ist, ist das Profil der Vertiefungen 10 dem Kegelprofil des unteren Teils der Schmucksteine 20 des Typs "Chatons" angepaßt. Die Ausgestaltung der Vertiefungen und der damit zusammenwirkenden Haltelippen ist dergestalt, daß auch Toleranzen in den Steinabmessungen kein Problem darstellen, sondern die Schmucksteine oder andere Kleinteile stets in einer bestimmten Position fixiert sind, d.h.

sich insbesondere nicht querlegen oder herumdrehen können.

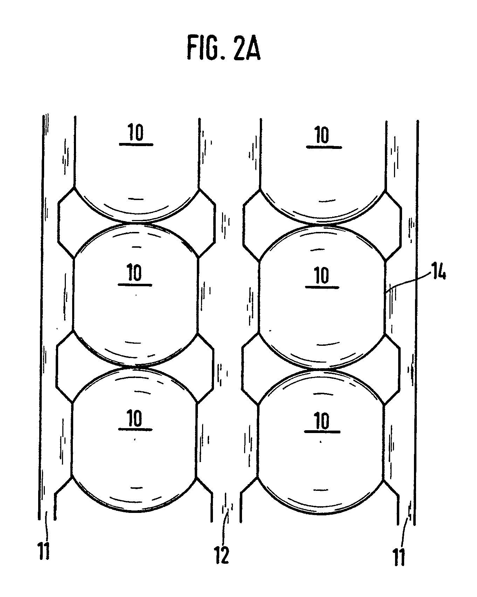

Die Haltelippen 11 sind vorzugsweise in Magazinstreifenlängsrichtung angeordnet. Sie können aber auch quer dazu liegen. Die Haltelippen 11 sind durchgehend, wobei deren Ausgestaltung über die gesamte Länge unverändert sein kann, wie in Figur 2 dargestellt oder wie in Figur 2a dargestellt, können die Haltelippen im Bereich der Vertiefungen 10 ausgeprägter und weiter in die Vertiefung reichend ausgestaltet sein, als in den Bereichen zwischen den Vertiefungen 10.

Die Schmucksteine oder andere Kleinteile werden zumindest auf einer Seite von einer Haltelippe 11 gehalten. Es wird jedoch bevorzugt, die Schmucksteine auf gegenüberliegenden Seiten gleichförmig durch die Haltelippen zu fixieren.

Die Haltelippen 11 sind federnd vorgespannt und halten nach Eindrücken der Schmucksteine 20 in die Vertiefungen 10 diese in fixierter Position. Um ein Eindrücken der Steine zu ermöglichen, sind die Haltelippen elastisch verformbar.

Zur Entnahme der Schmucksteine werden die äußeren Haltelippen 11 nach außen, d.h. von den Schmucksteinen weg gebogen, so daß die Haltelippen außer Eingriff von den Steinen kommen. Die Aufspreizung der inneren Haltelippen 12 erfolgt durch Querdehnen des Magazinstreifens, worauf bei Figuren 3 und 4 näher eingegangen wird.

Zur Ausbildung des in Figur 1 gezeigten Magazinstreifens werden die Vertiefungen 10 sowie die Haltelippen 11, 12 durch plastische Verformung, insbesondere Tiefziehen, gebildet. Die Haltelippen 11, 12 begrenzen die Reihe der Vertiefungen 10 und laufen parallel zueinander in Längsrichtung des Magazinstreifens 1. Die Haltelippen sind so geformt, das sie in Querrichtung zum Magazinstreifen 1 federnd vorgespannt sind. Bei der Füllung der Vertiefungen 10 mit Schmucksteinen 20 schnappen die Schmucksteine 20 gegen die Federkraft der Haltelippen 11, 12 in den Vertiefungen 10 ein und werden im eingesetzten Zustand (vgl. Figur 4) mit ihrem oberen, kegelstumpfförmigen Abschnitt von den zurückfedernden Haltelippen 11, 12 erfaßt und gehaltert. Diese Schnapphalterung der Schmucksteine 20 gewährleistet eine exakte Positionierung der Schmucksteine 20 im Magazinstreifen, so daß sich die Schmucksteine 20 während des Transports nicht verdrehen können.

Die Haltelippen 11, 12 können in ihrer Höhe so bemessen werden, daß sie die Oberkante der eingesetzten Schmucksteine 20 überragen, wodurch ein hervorragender Schutz der Schmucksteine gegen Transportbeschädigungen gewährleistet ist.

Eine weiterer, wesentlicher Vorteil der erfindungsgemäßen Magazinstreifen ergibt sich durch die in Figuren 3 und 4 veranschaulichte Entnahme der Schmucksteine 20 aus dem Magazinstreifen 1 beim Verarbeiten, insbesondere automatisierten Verarbeiten.

Hierzu wird der gefüllte Magazinstreifen 1 mit seinen äußeren Haltelippen 11 in die Seitenschenkel 31 einer etwa U-förmigen Führungsschiene 30 eingeführt, wobei die Endbereiche der Seitenschenkel 31 an das Profil der Haltelippen 11 angepaßt sind. Die Fuhrungsschiene weist einen Einführungsabschnitt mit geringem Schenkelabstand A1 (Figur 3) und einem Entnahmeabschnitt mit größerem Schenkelabschnitt A2 (Figur 4) auf. Der Übergang zwischen diesen beiden Schienenabschnitten ist kontinuierlich. Die in die Seitenschenkel 31 eingeführte Verpackung wird längs der Führungsschiene 30 bewegt, wobei innerhalb des Einführungsabschnittes gemäß Figur 3 die inneren Haltelippen 12 des Magazinstreifens 1 noch keinen Dehnkräften in Querrichtung unterzogen werden.

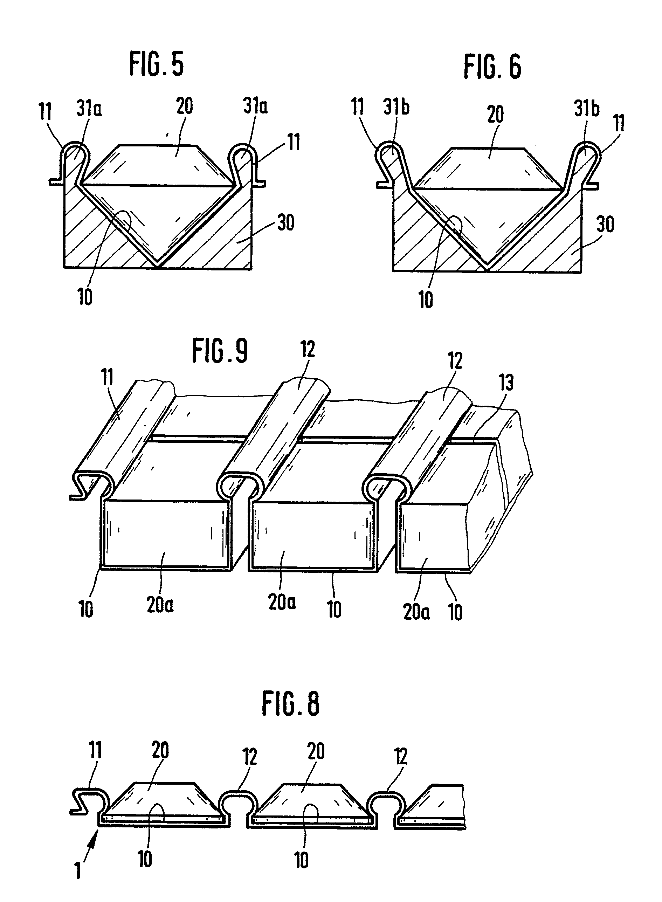

Dies erfolgt erst aufgrund der Vergrößerung des Schenkelabstandes A2 gemäß Figur 4, was zu einer Spreizung der inneren Haltelippen 12 führt. Infolge dieser Spreizung werden die kegelstumpfförmigen oberen Bereich der Schmucksteine 20 des dargestellten Typs "Chatons" von der Haltekraft der inneren Schließlippen 12 frei. Ferner werden durch nach außen Biegen der äußeren Haltelippen 11, worauf nachstehend bei Figuren 5 und 6 hingewiesen wird, die Schmucksteine 20 auch von der Schließkraft der äußeren Haltelippen 11 befreit, so daß die Schmucksteine 20 ungehindert mittels nicht dargestellter Tupfer oder Vakuumsauger in derselben Positionierung, wie sie beim Einsetzen der Schmucksteine 20 vorgesehen wurde, entnommen und verarbeitet werden können. Die Arbeitsschritte des Einführens des gefüllten Magazinstreifens 1 in die Führungsschiene 30, das Bewegen des Magazinstreifens 1 längs der Führungsschiene 30 und das Entnehmen der "entsicherten" Schmucksteine 20 aus den Vertiefungen 10 mittels Tupfer oder Vakuumsauger kann voll automatisch erfolgen. Der Transport des Magazinstreifens kann beispielsweise durch eine auf der Unterseite angeordnete Walze erfolgen, wobei Mitnahmeeinrichtungen von unten hinter die Vertiefungen 10 eingreifen und den Magazinstreifen 1 vorwärts bewegen.

Wie man aus Figur 5 ferner erkennt, werden innerhalb des Entnahmeabschnitts der Führungsschiene 30 im wesentlichen nur die elastisch verformbaren Haltelippen 12 nicht hingegen die Vertiefungen 10 des Magazinstreifens 1 gespreizt. Dies gewährleistet, daß die Schmucksteine 20 auch nach dem Entfernen der Haltekräfte seitens der Haltelippen 12 ihre ursprüngliche Position innerhalb der Vertiefungen 10 weiterbehalten.

Um auch die äußeren Haltelippen 11 zu spreizen, sind die Enden der Seitenschenkel 31, welche in die äußeren Haltelippen 11 eintauchen, von einer zunächst konvergierenden Stellung, wie in Figur 3

gezeigt, in eine divergierende Stellung, wie in Figur 4 gezeigt, übergeleitet. Dieses spezielle Merkmal ist anhand der Figuren 5 und 6 näher erläutert.

Die Figuren 5 und 6 zeigen einen einreihigen Magazinstreifen mit nur einer einzigen Reihe von Vertiefungen 10, die ebenfalls für Schmucksteine 20 des Typs "Chatons" ausgebildet sind. Die dann zum Herausnehmen der Schmucksteine 20 verwendete Führungsschiene 30 folgt der Keilform des Querschnitts der kegelförmigen Vertiefungen 10. Die in Draufsicht in Figur 7 dargestellte Führungsschiene 30 weist einen Einführungsabschnitt 301 und einen Entnahmeabschnitt 302 auf, wobei ein Querschnitt durch den Einführungsabschnitt 301 in Figur 5 und ein Querschnitt durch den Entnahmeabschnitt 302 in Figur 6 dargestellt sind. Die in Figur 5 mit 31a bezeichneten Seitenschenkel der Führungsschiene 30 innerhalb des Einführungsabschnittes 301 weisen die schon erwähnte konvergierende Stellung auf, in welche die in die Seitenschenkel 31a eingeführten Haltelippen 11 in ihrer Halteposition verbleiben. Innerhalb des Entnahmeabschnittes 302 (Figur 7) sind die in Figur 6 mit 31b bezeichneten Seitenschenkel der Führungsschiene 30 in eine divergierende Position verändert, wodurch die Haltelippen 11 in Querrichtung des Magazinstreifens 1 gespreizt werden. Der Übergang vom Einführungsabschnitt 301 zum Entnahmeabschnitt 302 ist vorzugsweise kontinuierlich. Der Transport des Magazinstreifens erfolgt zweckmäßig mit von auf der Unterseite eingreifenden Förderwalzen.

Bei einer Anordnung der Haltelippen 11, 12 quer zur Längsrichtung des Magazinstreifens 1 erfolgt die Freigabe der Schmucksteine 20 und damit deren Entnehmbarkeit, indem der Magazinstreifen in Längsrichtung gedehnt wird, so daß die Haltelippen 20 in analoger Weise wie in Figur 3 gezeigt, gespreizt werden und den kegelstumpfförmigen Oberteil der Schmucksteine 20 freigeben.

In Figur 8 ist eine weitere Ausführungsform des erfindungsgemäßen Magazinstreifens für Schmucksteine 20 des Typs "Rosen" dargestellt. Die Vertiefungen 10 des Magazinstreifens 1 sind dabei an das trapzeförmige Profil dieser Schmucksteine angepaßt, d.h. sie weisen einen flachen ebenen Boden auf, an dessen Außenrändern unmittelbar die Haltelippen 11, 12 ansetzen. Die Schmucksteine überragen dabei, wie dargestellt, die Haltelippen 11, 12 sofern auf einen Transportschutz verzichtet werden kann. Ist dies nicht der Fall, dann sind die Haltelippen 11, 12 entsprechend nach oben stehend ausgeformt, ähnlich wie dies bei dem Ausführungsbeispiel gemäß Figur 9 für quaderförmige Elektronikbausteine 20a dargestellt ist.

Die Elektronikbausteine 20a sind in Vertiefungen 10 angeordnet, die von den Haltelippen 11, 12 sowie Trennwänden 13 begrenzt werden. Die Entnahme der Schmucksteine, bzw. Elektronikbausteine bei dem Ausführungsbeispiel gemäß Figuren 8 und 9 erfolgt in gleicher Weise, wie gemäß Figuren 3 und 4 erläutert.

Bei der vorstehend erwähnten Anpassung der Vertiefungen 10 an das jeweilige Profil der darin einzusetzenden und zu haltenden Schmucksteine, bzw. andere Kleinteile, wie Elektronikbausteine, ist ein weiter Toleranzbereich möglich, da die eingesetzten Schmucksteine bzw. Kleinteile in erster Linie durch die Haltekraft der anliegenden Haltelippen 11, 12 im Magazinstreifen gehalten werden.

## Ansprüche

1. Magazinstreifen (1) für Schmucksteine (20) oder anderer Kleinteile umfassend eine Kunststoffolie, welche Vertiefungen (10) zur Aufnahme der Schmucksteine (20) aufweist, die Vertiefungen (10) zumindest einem Teilprofil der darin zu positionierenden Schmucksteine (20) angepaßt sind, die Vertiefungen (10) reihenförmig angeordnet sind und angrenzend an die Vertiefungen (10) Haltelippen (11, 12) vorgesehen sind, wobei die Haltelippen (11, 12) im geschlossenen Zustand über die positionierten Schmucksteine (20) greifen und sie dadurch in ihrer Lage fixieren und die Haltelippen (11, 12) durch elastische Verformung außer Eingriff mit den Schmucksteinen (20) bringbar sind, **dadurch gekennzeichnet,** daß die Haltelippen (10) in Längs- oder Querrichtung des Magazinstreifens (1) durchgehend sind und ein durchgehend nach unten offenes Profil aufweisen, so daß die Haltelippen (10) durch Dehnen des Magazinstreifens (1) quer zur Anordnungsrichtung der Haltelippen (10) außer Eingriff mit den Schmucksteinen (20) bringbar sind.

2. Magazinstreifen nach Anspruch 1, **dadurch gekennzeichnet, daß** mehrere parallele Reihen von Vertiefungen (10) vorgesehen sind.

3. Magazinstreifen nach Anspruch 1 oder 2, **dadurch gekennzeichnet, daß** die Haltelippen (11, 12) in Längsrichtung des Magazinstreifens (1) angeordnet sind.

4. Verfahren zum Entnehmen von Schmucksteinen oder anderer Kleinteile aus einem Magazinstreifen mit einer einzigen Reihe von Vertiefungen, **dadurch gekennzeichnet, daß** die Seitenschenkel (31) einer Führungsschiene (30) in die beiden äußeren Haltelippen (11) des gefüllten Magazinstreifens (1) eingeführt werden, der Magazinstreifen (1) längs der Führungsschiene (30) von einem Einlaufabschnitt (301) mit konvergierenden Seitenschenkeln (31a) zu einem Entnahmeabschnitt (302) mit divergierenden Seitenschenkein (31b) bewegt wird, die äußeren Haltelippen (11) beim Durchlaufen des Entnahmeabschnitts (302) der Führungsschiene (30) gegen ihre Federvorspannung in Magazinstreifenquerrichtung gespreizt werden, und die Schmucksteine (20) in der gespreizten Stellung der äußeren Haltelippen (11) mittels Tupfer oder Vakuumsauger aus den Vertiefungen (10) entnommen werden.

5. Verfahren zum Entnehmen von Schmucksteinen oder anderen Kleinteilen aus einem Magazinstreifen mit mehreren parallelen Reihen von Vertiefungen, **dadurch gekennzeichnet, daß** die Seitenschenkel (31) einer etwa U-förmigen Führungsschiene (30) in die beiden äußeren Haltelippen (11) des gefüllten Magazinstreifens (1) eingeführt werden, der Magazinstreifen (1) längs der Führungsschiene (30) von einem Einlaufabschnitt mit geringerem Schenkelabstand (A1) und konvergierenden Seitenschenkeln (31) zu einem Entnahmeabschnitt mit größerem Schenkelabschnitt (2A) und divergierenden Seitenschenkeln (31) bewegt wird, die inneren Haltelippen (12) beim Durchlaufen des Entnahmeabschnitts der Führungsschiene (30) gegen ihre Federvorspannung in Magazinstreifenquerrichtung gespreizt werden und die äußeren Haltelippen (11) beim Durchlaufen des Entnahmeabschnitts ebenfalls gegen ihre Federvorspannung gespreizt werden, und die Schmucksteine (20) in der gespreizten Stellung der Haltelippen (11, 12) mittels Tupfer oder Vakuumsauger aus den Vertiefungen (10) entnommen werden.

6. Verfahren zum Entnehmen von Schmucksteinen oder anderen Kleinteilen aus einem Magazinstreifen mit ein oder mehreren Längsreihen von Vertiefungen und Haltelippen quer zur Magazinstreifenlängsrichtung, **dadurch gekennzeichnet, daß** der Magazinstreifen (1) in Längsrichtung gedehnt wird, bis die Haltelippen (12) außer Eingriff mit den Schmucksteinen (20) kommen und die Schmucksteine (20) in der gespreizten Stellung mittels Tupfer oder Vakuumsauger aus den Vertiefungen (10) entnommen werden.

## FIG. 1

## FIG. 2

FIG. 2A

EP 0 392 331 A1

FIG.3

11  20  12  20  12  20  11

31

10  10

30

A1

FIG.4

11  20  12  20  12  20  11

31

10  10

31

30

A2

FIG.7

301  302

30

## FIG. 5

11  31a  20  31a  11
10  30

## FIG. 6

11  31b  20  31b  11
10  30

## FIG. 9

11  12  12  13
10  20a  20a  10  20a  10

## FIG. 8

11  20  12  20  12
1  10  10

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,P | DE-U-8 905 973 (FESTO KG) * Seite 15, Zeile 1 - Seite 16, Zeile 16; Abbildung 6 * --- | 1-3 | B 65 D 73/02 B 65 G 47/26 B 65 B 69/00 |
| X | CH-A- 251 560 . (BENZON-PETERSEN) * Seite 2, linke Spalte, Zeilen 12-25; Abbildungen 1,5-7 * --- | 1-3 | |
| X | US-A-3 357 548 (FREEMAN) * Spalte 2, Zeile 36 - Spalte 3, Zeile 38; Abbildungen 1-5 * --- | 1-3 | |
| X | US-A-2 874 408 (VIELI) * Spalte 4, Zeilen 42-50; Abbildung 3 * --- | 1-3 | |
| A | US-A-3 406 821 (WEISSBERG) * Spalte 2, Zeilen 10-15; Abbildungen 1-5 * --- | 1 | |
| A | FR-A-2 589 432 (S.B.K.) * Seite 3, Zeile 29 - Seite 4, Zeile 23; Abbildungen 1,3-7 * --- | 4-6 | RECHERCHIERTE SACHGEBIETE (Int. Cl.5) |
| A | GB-A-1 198 776 (HOFLIGER & KARG) --- | | B 65 D B 65 G A 45 C B 65 B |
| A | US-A-3 565 262 (SOSALLA) --- | | |
| A | EP-A-0 287 845 (SEITZ ENZINGER NOLL) --- | | |
| A | EP-A-0 299 346 (PRONOVA AB) ------ | | |

Der vorliegende Recherchenbericht wurde für alle Patentansprüche erstellt

| Recherchenort | Abschlußdatum der Recherche | Prüfer |
|---|---|---|
| DEN HAAG | 13-07-1990 | BERRINGTON N.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..............................................................
& : Mitglied der gleichen Patentfamilie, übereinstimmendes Dokument

EPO FORM 1503 03.82 (P0403)